# EUROPÄISCHE PATENTSCHRIFT

(11) **EP 1 232 935 B1**
(45) Veröffentlichungstag und Bekanntmachung des Hinweises auf die Patenterteilung: **08.08.2007**
(21) Anmeldenummer: 02003186.0
(22) Anmeldetag: 18.02.2002
(51) Int. Cl.: B62D 29/00

(54) **Fahrzeugkarosserie**
Motor vehicle body
Carrosserie de véhicule automobile

(30) Priorität: 19.02.2001 DE 10107729
(43) Veröffentlichungstag der Anmeldung: 21.08.2002
(73) Patentinhaber: ADAM OPEL AG, 65423 Rüsselsheim (DE)
(72) Erfinder: Wanke, Thomas, Dipl.-Ing., 55239 Gau-Odernheim (DE); Mildner, Udo, Dipl.-Ing.(FH), 65550 Limburg (DE); Ringel, Franz-Josef, 55129 Mainz (DE)

(56) Entgegenhaltungen:
- EP-A- 0 995 668
- EP-A- 1 084 940
- WO-A-02/04276
- DE-A- 19 850 589
- DE-U- 20 013 208
- US-A- 5 190 803
- US-A- 5 580 122

## Beschreibung

Die Erfindung bezieht sich auf eine Fahrzeugkarosserie mit einer im Querschnitt U-förmigen Profilstrebe aus einem Metall, die mit Schottwänden zur Versteifung versehen ist, wobei die Schottwände aus Kunststoff bestehen, die in der Strebe befestigt sind. Eine derartige Konstruktion ist in US-A-5190803 beschrieben.

Die freitragende Karosserie eines Fahrzeuges ist aus einer Vielzahl von Streben zusammengesetzt, die - je nachdem welche spezifische Aufgabe sie innerhalb der Karosserie haben - auch als Längsträger, Holm oder Säule bezeichnet werden. In das von den Streben gebildete Gerüst werden so weit wie notwendig Wände eingezogen, z. B. ein Bodenblech zur unteren Begrenzung der Fahrgastzelle. Außerdem dienen die Streben zur Halterung von Aggregaten. So wird z. B. der Fahrzeugmotor innerhalb des Motorraumes so eingesetzt, dass sich sein Gewicht auf die dort verlaufenden Längsträger abstützt. Die Streben haben weiterhin die Aufgabe, in einer Kollision auftretende Stoßkräfte aufzunehmen und dabei die Stoßenergie durch Verformung zu absorbieren.

Streben mit einem U-förmigen Querschnitt lassen sich leicht durch Blechumformung herstellen. Sie haben außerdem aufgrund ihres Querschnittes eine hohe Steifigkeit. Allerdings reicht diese Steifigkeit nicht für alle Lastfälle aus, so dass die Streben zum Teil doppelt ausgeführt sind. Dazu wird in eine Strebe eine zweite Strebe mit einem entsprechenden Querschnitt eingelegt. Es sind auch schon Streben bekannt, bei denen Schottwände aus Blech eingesetzt sind. So werden z. B. die Seitenholme, die das Bodenblech seitlich begrenzen, mit querstehenden Versteifungen versehen, um die Stoßkräfte bei einer Seitenkollision aufnehmen zu können. Mit dieser Maßnahme soll die Gefahr des Eindringens der Fahrzeugseitenwand in die Fahrgastzelle minimiert werden.

Diese Schottwände werden üblicherweise aus einem Metallblech geformt. Die Eingliederung in die Strebe ist dabei allerdings recht aufwendig, da jede Wand in geeigneter Weise, z. B. durch Schweißen oder Nieten, in die Strebe eingefügt werden muss.

Die Erfindung beruht daher auf der Aufgabe, eine Versteifung für die Streben vorzusehen, die leicht herzustellen ist und trotz allem die jeweiligen Anforderungen hinsichtlich der Belastbarkeit der Strebe erfüllt und trotz des Leichtbaus in der Lage ist, insbesondere den in einer Kollision auftrehenden hoher Kräften zu widerstehen.

Zur Lösung der Aufgabe wird vorgeschlagen, dass die Strebe einen Abschnitt eines Längsträgers bildet, der vom Motorraum kommend unter das Bodenblech läuft und im übergangsbereich einen Knickbereich bildet, und dass die Schottwände im Knickbereich angeordnet sind. Vorteilhafte Weiterbildungen der Erfindung sind in den abhängigen Ansprüchen 1 bis 17 definiert.

Im Folgenden soll die Erfindung anhand der eben vorgestellten Ausführungsbeispiele noch einmal im Detail erläutert werden. Dazu zeigen
- Fig. 1: eine Seitenansicht auf den Längsträger eines Vorderrahmens,
- Fig. 2: eine Draufsicht auf den Längsträger zur Darstellung der Gitterstruktur der Kunststoffschottwände,
- Fig. 3: einen Schnitt entlang der Linie III-III der Fig. 2 zur Darstellung der Verbindung des Gitters mit dem Längsträger,
- Fig. 4: einen weiteren Schnitt entlang der Linie IV-IV der Fig. 2,
- Fig. 5: eine Seitenansicht auf eine B-Säule mit einem eingelegten Gitter aus Kunststoff,
- Fig. 6: einen Schnitt entlang der Linie VI-VI der Fig. 5,
- Fig. 7: einen Schnitt entlang der Linie VII-VII der Fig. 5,
- Fig. 8: eine Draufsicht auf einen Scheibenquerträger,
- Fig. 9: einen Schnitt entlang der Linie IX-IX der Fig. 8,
- Fig. 10: einen Schnitt entlang der Linie X-X der Fig. 8,
- Fig. 11: einen Schnitt entlang der Linie XI-XI der Fig. 8.

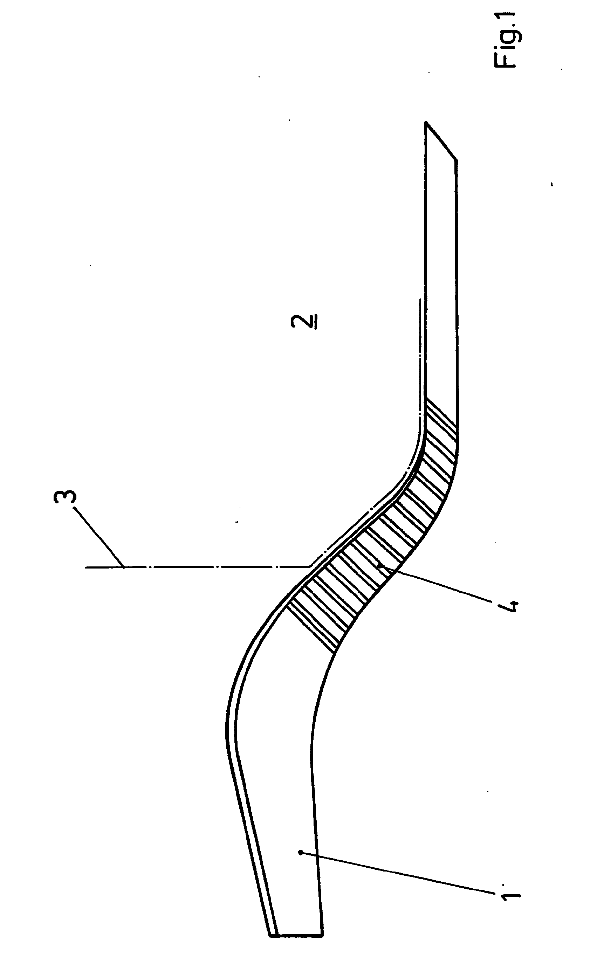

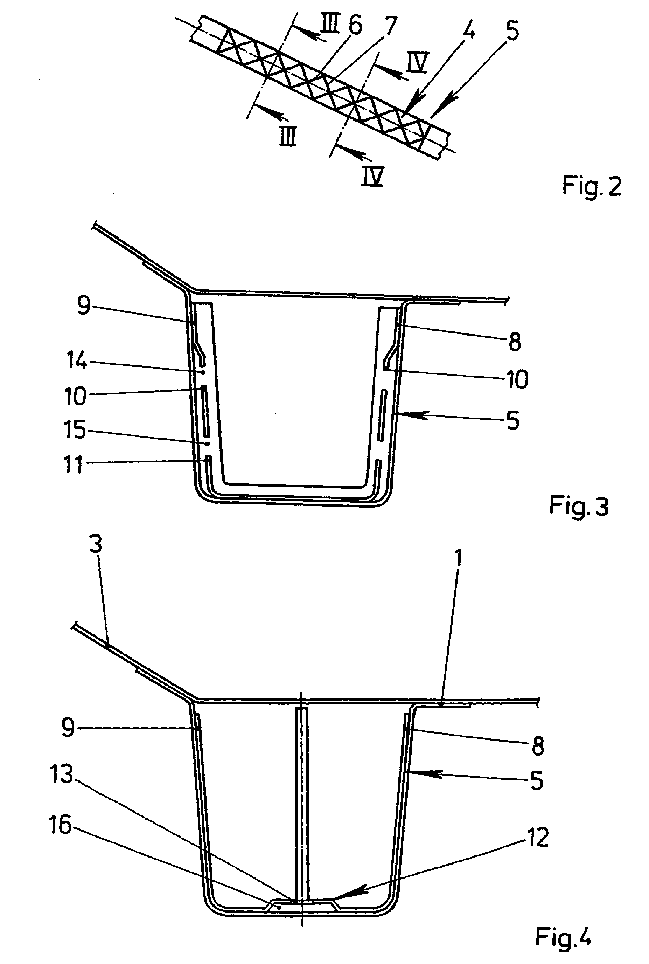

Figur 1 zeigt die Seitenansicht eines Vorderrahmens. Dabei handelt es sich um im Querschnitt U-förmiges Blech, das in der Regel nach oben hin offen ist. Der Längsträger 1 verläuft von der Front des Fahrzeuges links im Bild unter die Fahrgastzelle 2 rechts im Bild, wobei der Längsträger 1 in einem Bogen nach unten verläuft, auf dem die Stirnwand 3, die den Motorraum vom Fahrgastraum trennt, aufgesetzt ist. Der Übergangsbereich unterhalb der Stirnwand 3 wird gemäß der Figur 2 versteift. Dazu wird in den Längsträger 1 ein Gitter 4 mit aus Kunststoff bestehenden Schottwänden, das an einem U-förmigen Träger 5 befestigt ist, eingelegt. Das Gitter 4 besteht aus mehreren Schottwänden 6, 7, die unter einem Winkel von 90° zueinander verlaufen und sich an ihren Enden treffen, so dass ein einstückiges Gitter 4 entsteht. Dieses Gitter 4 wird in einer Spritzgussmaschine gegossen, in dessen Werkzeug der U-förmige Träger 5 gemäß der Figuren 3 und 4 zuvor eingelegt worden ist. Dieser Träger 5 besitzt einen U-förmigen Querschnitt und ist in den Bereichen, in denen die Schottwände 6, 7 auf die Seitenwände 8, 9 des Trägers 5 treffen, nach innen gezogen und gemäß Figur 3 auf jeder Seite mit zwei übereinander liegenden Löchern 10, 11 versehen. In den Bereichen, in denen sich die Schottwände 6, 7 des Gitters 4 überschneiden, befindet sich gemäß Figur 4 im Boden jeweils eine Vertiefung 12 mit einem zentralen Loch 13.

Beim Spritzgießen der Schottwände 6, 7 dringt Material durch die Löcher 10, 11, 13 und verteilt sich unter Bildung jeweils eines Kopfes 14, 15, 16 im nach innen gezogenen Bereich bzw. in der Vertiefung 12.

Die beiden Köpfe 14, 15 der übereinander liegenden Löcher 10, 11 der Seitenwände 8, 9 des Trägers 5 gehen ineinander über, so dass eine langgestreckte Tafel gebildet ist, die über zwei Hälse mit den Schottwänden 6, 7 verbunden ist.

Der Träger 5 und die Köpfe 14, 15, 16 der formschlüssigen Verbindung bilden eine durchgehende, stufenlose Oberfläche, die der Innenkontur des Längsträgers 1 entspricht, so dass der Träger 5 mit dem eingespritzten Gitter 4 passgenau in den Längsträger 1 eingelegt werden kann. Die Karosserie wird vervollständigt, indem der Übergangsbereich durch die Stirnwand 3 bzw. das Bodenblech abgedeckt wird.

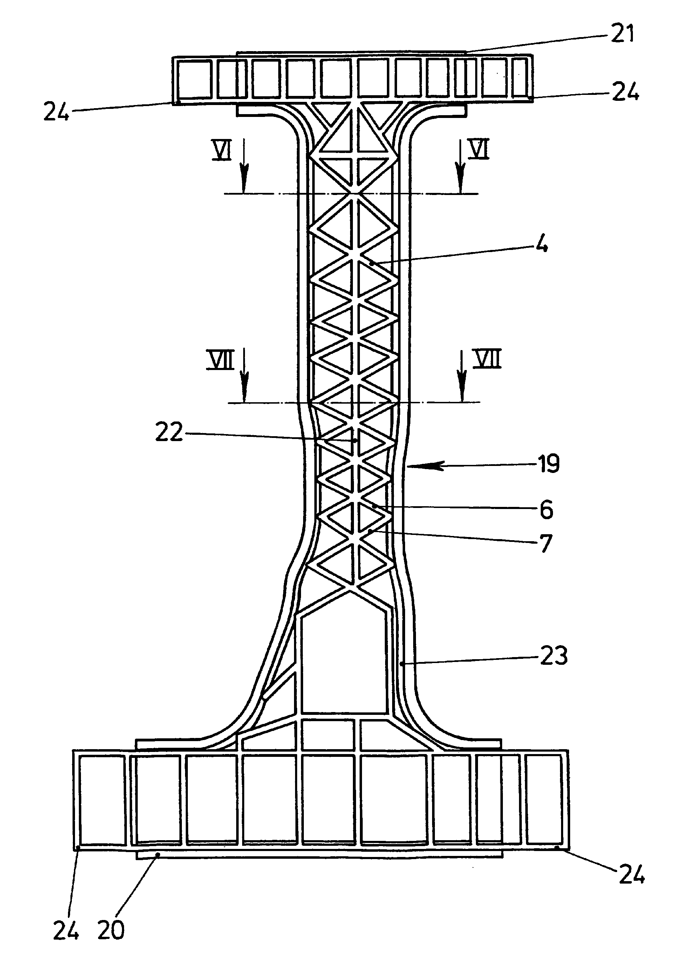

In dem weiteren Ausführungsbeispiel, dargestellt in den Fig. 5 bis 7, wird eine erfindungsgemäße versteifte B-Säule 19 gezeigt. Diese verbindet einen unteren und einen oberen Seitenholm 20, 21 an der Seite der Fahrgastzelle 2. Die beiden unteren Seitenholme 20 zu beiden Seiten der Fahrgastzelle sind über das Bodenblech miteinander verbunden, während sich zwischen den oberen Seitenholmen 21 das Dach des Fahrzeuges erstreckt. Die notwendige Versteifung der B-Säule 19 dient insbesondere dazu, Einknickungen der B-Säule 19 bei einer seitlichen Stoßbelastung, wie sie bei einer Seitenkollision auftritt, zu unterbinden. Dazu ist in der B-Säule 19 ein Gitter 4 aus Kunststoffschottwänden 6, 7 vorgesehen, das in etwa dem der Figur 2 entspricht. Zusätzlich ist eine durchgehende, in Längsrichtung der B-Säule verlaufende Stabilisierungswand 22 vorgesehen, die durch die Überschneidungspunkte der schräg verlaufenden Schottwände 6, 7 verläuft. Das Gitter 4 ist in ähnlicher Weise wie oben beschrieben mit einem Verstärkungsprofil 23 aus Metall verbunden, das in die B-Säule 19 eingelegt ist. Das Gitter 4 wird oben und unten vervollständigt durch jeweils zwei Seitenarme 24, die in den oberen bzw. unteren Seitenholm 20, 21 hineinragen. Dort verlaufen die Schottwände 25 parallel zueinander quer zur Längserstreckung des Seitenholmes 20, 21. Die einzelnen Abschnitte des Gitters 4 bilden eine zusammenhängende einheitliche Struktur, die insbesondere verhindert, dass die B-Säule 19 bei einer stoßartigen Belastung an den Seitenholmen 20, 21 scharnierartig nach innen abknickt.

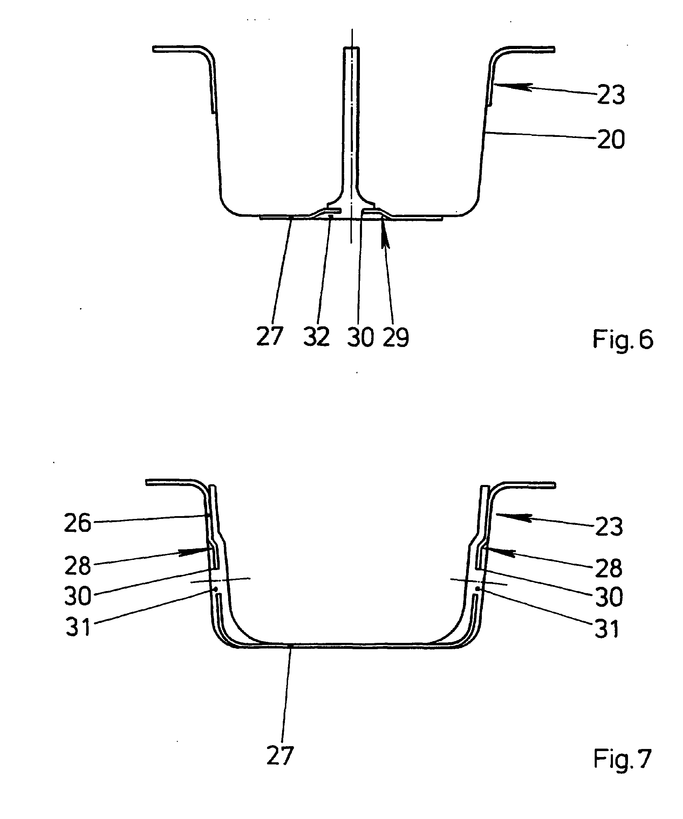

Wie die Figuren 6 und 7 zeigen, sind in den Seitenwänden 26 und dem Boden 27 des U-förmigen Verstärkungsprofils 23 Löcher 30 eingebracht, die in Vertiefungen 28, 29 liegen. Das Verstärkungsprofil 23 wird in das Spritzgusswerkzeug eingelegt, so dass das eingespritzte Material zur Bildung des Gitters 4 durch die Löcher 30 in die Vertiefungen 28, 29 dringen kann und dort jeweils einen Kopf 31, 32 bildet, mit dem das Gitter 4 in dem Verstärkungsprofil 23 verankert ist.

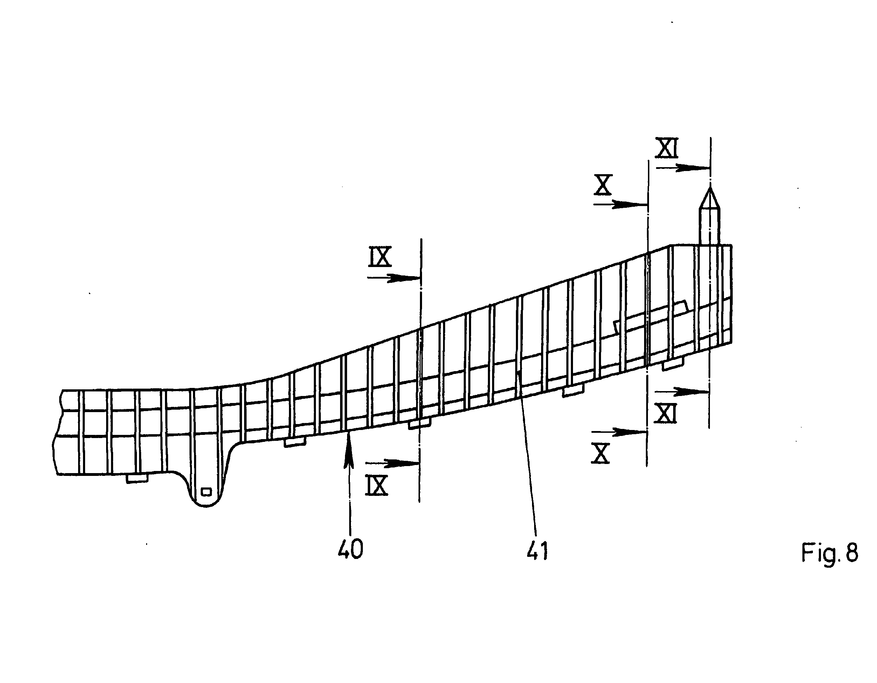

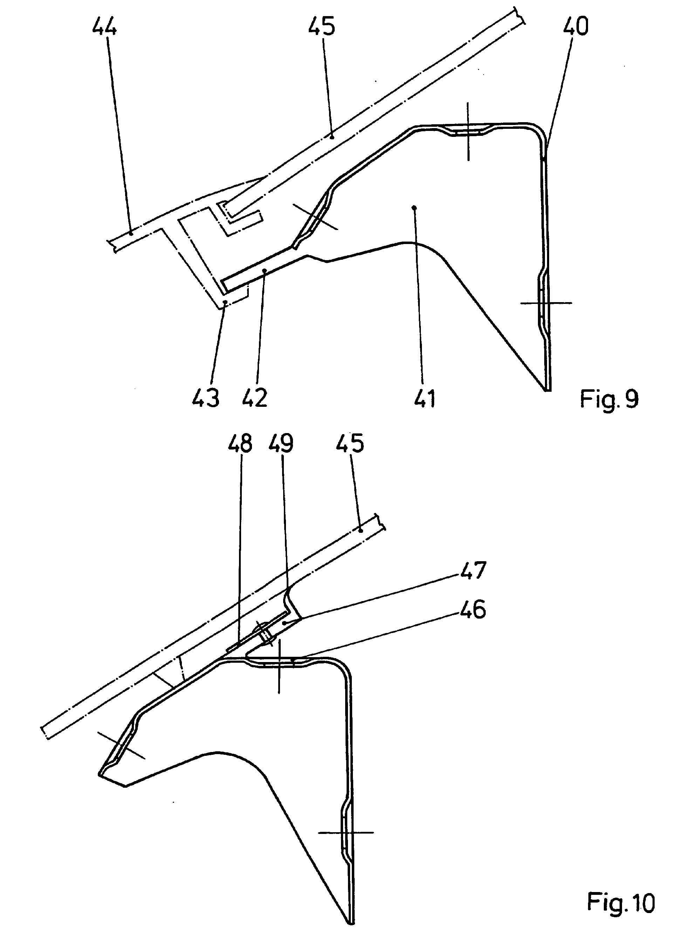

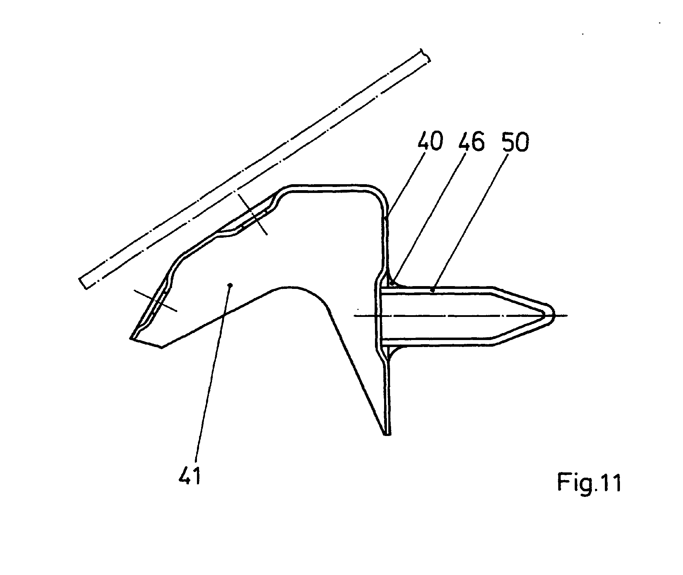

Das letzte Ausführungsbeispiel zeigt in den Figuren 8 bis 13 einen Scheibenquerträger 40. Dieser erstreckt sich quer zur Fahrzeuglängsrichtung oberhalb der im ersten Ausführungsbeispiel schon erwähnten Stirnwand 3 und bildet den unteren Rahmen für die Frontscheibe des Fahrzeuges. Wie die Schnitte der Figuren 11 bis 13 zeigen, handelt es sich um ein nach unten offenes, U-förmiges Profil, das - wie die Figur 8 zeigt - mit einer Vielzahl von quer verlaufenden Schottwänden 41 versehen ist, die in der schon beschriebenen Weise unmittelbar mit dem Scheibenquerträger 40 formschlüssig verbunden sind. Auch hier kann nicht nur die gezeigte parallele Ausrichtung der Schottwände 41 vorgesehen werden, sondern auch eine sich überschneidende. Das Besondere bei diesem Ausführungsbeispiel besteht darin, dass die Schottwände 41 nicht nur der Versteifung des Scheibenquerträgers 40 dienen, sondern auch Halte- oder Tragefunktion übernehmen, indem zusätzliche aus dem Querschnitt des Scheibenquerträgers 40 hervorragende Abschnitte angeformt sind. Die Figur 9 zeigt z. B., dass an dem Bereich einer Schottwand 41, der den Querschnitt des Scheibenquerträgers 40 ausfüllt, ein in Fahrtrichtung gesehen nach vorne ragender Stab 42 angeformt ist, der als Widerpart für einen Haken 43 eines Wasserabweisers 44 dient, der hier ebenso wie die Frontscheibe 45 strichpunktiert darstellt ist.

Figur 10 zeigt, dass an den Kopf 46 einer formschlüssigen Verbindung ebenfalls ein Halter 47 angeformt ist, das als Befestigung für eine Dichtplatte 48 dient und eine Dichtzunge 49 aufweist, die an der Frontscheibe 45 anliegt.

Eine weitere Möglichkeit besteht darin, dass zumindest ein Kopf 46 einer formschlüssigen Verbindung zu einem Zentrierbolzen 50 ausgebildet ist. Derartige Zentrierbolzen 50 sind an sich bekannt. Sie befinden sich an den äußeren Enden des Frontscheibenquerträgers und dienen dazu, einen hier nicht dargestellten Querträger, an dem ein Armaturenbrett vormontiert ist, lagegenau in die schon aufgebaute Karosserie eingliedern zu können. Dazu weist der genannte Querträger entsprechende Öffnungen auf, in die die Zentrierbolzen 50 eingeführt werden.

Weitere Möglichkeiten, die hier nicht dargestellt sind, sehen vor, dass ein Kopf an der Oberseite des Scheibenquerträgers als Anlage für die Frontscheibe ausgebildet ist. Außerdem können einige Schottwände verdickt ausgeführt werden, so dass z. B. die Abstützung der Wischeranlage dort angesetzt werden kann.

### Bezugszeichenliste

- 1: Längsträger
- 2: Fahrgastzelle
- 3: Stirnwand
- 4: Gitter
- 5: Träger

- 6: Schottwand
- 7: Schottwand
- 8: Seitenwand
- 9: Seitenwand
- 10: Loch

- 11: Loch
- 12: Vertiefung
- 13: Loch
- 14: Kopf
- 15: Kopf

- 16: Kopf

- 19: B-Säule
- 20: Seitenholm

- 21: Seitenholm
- 22: Stabilisierungswand
- 23: Verstärkungsprofil
- 24: Seitenarm
- 25: Schottwand

- 26: Seitenwände
- 27: Boden
- 28: Vertiefung
- 29: Vertiefung
- 30: Loch

- 31: Kopf
- 32: Kopf

- 40: Scheibenquerträger

- 41: Schottwände
- 42: Stab
- 43: Haken
- 44: Wasserabweiser
- 45: Frontscheibe

- 46: Kopf
- 47: Halter
- 48: Dichtplatte
- 49: Dichtzunge
- 50: Zentrierbolzen

## Patentansprüche

1. Fahrzeugkarosserie mit einer im Querschnitt U-förmigen Strebe (1; 19; 40) aus einem Metall, die mit Schottwänden (6; 7; 25; 41) zur Versteifung versehen ist, wobei die Schottwände (6; 7; 25; 41) aus Kunststoff bestehen, die in der Strebe (1; 19; 40) befestigt sind, **dadurch gekennzeichnet, dass** die Strebe einen Abschnitt eines Längsträgers (1) bildet, der vom Motorraum kommend unter das Bodenblech läuft und im Übergangsbereich einen Knickbereich bildet, und dass die Schottwände (6, 7) im Knickbereich angeordnet sind.

2. Fahrzeugkarosserie nach Anspruch 1, **dadurch gekennzeichnet, dass** die Schottwände (6, 7) schräg verlaufend angeordnet sind und ein Gitter (4) bilden, das mit einem Träger (5) formschlüssig verbunden ist.

3. Fahrzeugkarosserie nach Anspruch 2, **dadurch gekennzeichnet, dass** das Gitter (4) in den Überschneidungspunkten der Schottwände (6, 7) mit dem Boden des Trägers (5) formschlüssig verbunden ist.

4. Fahrzeugkarosserie nach Anspruch 1, **dadurch gekennzeichnet, dass** die Strebe eine Säule, insbesondere die B-Säule (19) der Fahrgastzelle bildet.

5. Fahrzeugkarosserie nach Anspruch 4, **dadurch gekennzeichnet, dass** die Schottwände (6, 7) in einem an die Säule angepassten Verstärkungsprofil (23) befestigt sind und ein Gilter (4) bilden, das sich in quer zur B. Säule (19) verlaufende Seitenholme (20, 21) am Fuß und Kopf der B-Säule (19) erstreckt.

6. Fahrzeugkarosserie nach Anspruch 5, **dadurch gekennzeichnet, dass** das Gitter (4) in der Säule (19) aus rautenförmigen Waben besteht und in den Seitenholmen (20, 21) leiterförmig ist.

7. Fahrzeugkarosserie nach Anspruch 1, **dadurch gekennzeichnet, dass** die Strebe einen Scheibenquerträger (40) bildet.

8. Fahrzeugkarosserie nach Anspruch 7, **dadurch gekennzeichnet, dass** Abschnitte der Schottwand (41) durch eine Öffnung im Scheibenquerträger (40) ragen und als Befestigungspunkt oder Auflage für Aggregate dienen.

9. Fahrzeugkarosserie nach einem der vorhergehenden Ansprüche, **dadurch gekennzeichnet, dass** die Schottwände (6, 7; 25; 41) quer zur Längsausdehnung der Strebe (1; 19; 40) verlaufen.

10. Fahrzeugkarosserie nach Anspruch 9, **dadurch gekennzeichnet, dass** die Schottwände (6, 7; 25; 41) sich überschneidend schräg zur Längsausdehnung der Strebe (1; 19; 40) verlaufen.

11. Fahrzeugkarosserie nach Anspruch 9 oder 10, **dadurch gekennzeichnet, dass** eine Stabilisierungswand (22) in Längsausrichtung der Strebe (19) verläuft und die Schottwände (6, 7) schneidet.

12. Fahrzeugkarosserie nach einem der vorhergehenden Ansprüche, **dadurch gekennzeichnet, dass** die Befestigung eine formschlüssige Verbindung ist.

13. Fahrzeugkarosserie nach Anspruch 12, **dadurch gekennzeichnet, dass** die formschlüssige Verbindung unmittelbar mit der Strebe (40) besteht.

14. Fahrzeugkarosserie nach Anspruch 12, **dadurch gekennzeichnet, dass** die formschlüssige Verbindung mit einem an die Kontur der Strebe angepassten Träger (5) bzw. Verstärkungsprofil (23) besteht, der bzw. das in die Strebe (1; 19) konturgenau eingelegt ist.

15. Fahrzeugkarosserie nach Anspruch 13 oder 14, **dadurch gekennzeichnet, dass** zur Darstellung der formschlüssigen Verbindung an der Schottwand (6, 7; 25; 41) bzw. an der Stabilisierungswand (22) mindestens ein Kopf (14, 15, 16; 31, 32; 46) angeformt ist, dessen Hals durch ein Loch (10, 11, 13; 30) in die Seitenwand (8, 9; 26) bzw. den Boden (27) der Strebe (40) bzw. den Träger (5) bzw. das verstärkungsprofil (23) ragt, so dass der Kopf (14, 15, 16; 31, 32; 46) den Rand des Loches (10, 11, 13; 30) hintergreift.

16. Fahrzeugkarosserie nach Anspruch 15, **dadurch gekennzeichnet, dass** das Loch (10, 11, 13; 30) in einer Vertiefung (12; 28, 29) liegt, die durch eine Einbeulung in der Strebe (40) bzw. im Träger (5) bzw. im Verstärkungsprofil (23) realisiert ist, und dass die Kopfhöhe der Tiefe der Einbeulung entspricht.

17. Fahrzeugkarosserie nach Anspruch 15, **dadurch gekennzeichnet, dass** je zwei schräg verlaufende Schottwände (6, 7) sich an der Seitenwand (8, 9) treffen und dort verbunden sind und über einen gemeinsamen Kopf (14, 15) an der Seitenwand (8, 9) verankert sind.

## Claims

1. Vehicle body with a metal strut (1; 19; 40) with a U-shaped cross-section and provided with bulkhead walls (6; 7; 25; 41) for reinforcement, wherein the bulkhead walls (6; 7; 25; 41) are made of plastic and are fastened in the strut (1; 19; 40), **characterised in that** the strut forms a section of a longitudinal beam (1), which extending from the engine compartment runs below the floor panel and forms a bend region in the transition area, and that the bulkhead walls (6, 7) are arranged in the bend region.

2. Vehicle body according to Claim 1, **characterised in that** the bulkhead walls (6, 7) are arranged to run obliquely and form a grid (4), which is positively connected to a beam (5).

3. Vehicle body according to Claim 2, **characterised in that** in the intersection points of the bulkhead walls (6, 7) the grid (4) is positively connected to the base of the beam (5).

4. Vehicle body according to Claim 1, **characterised in that** the strut forms a column, in particular the B-column (19) of the passenger compartment.

5. Vehicle body according to Claim 4, **characterised in that** the bulkhead walls (6, 7) are fastened in a reinforcing profile (23) adapted to the column and form a grid (4), which extends in side members (20, 21) running transversely to the B-column (19) at the foot and head of the B-column (19).

6. Vehicle body according to Claim 5, **characterised in that** in the column (19) the grid (4) consists of diamond-shaped honeycomb elements and is in the form of a ladder in the side members (20, 21).

7. Vehicle body according to Claim 1, **characterised in that** the strut forms a window cross beam (40).

8. Vehicle body according to Claim 7, **characterised in that** sections of the bulkhead wall (41) project through an opening in the window cross beam (40) and serve as fastening point or support for assemblies.

9. Vehicle body according to one of the preceding claims, **characterised in that** the bulkhead walls (6, 7; 25; 41) run transversely to the longitudinal extent of the strut (1; 19; 40).

10. Vehicle body according to Claim 9, **characterised in that** the bulkhead walls (6, 7; 25; 41) intersect one another and run obliquely to the longitudinal extent of the strut (1; 19; 40).

11. Vehicle body according to Claim 9 or 10, **characterised in that** a stabilising wall (22) runs in the longitudinal orientation of the strut (19) and intersects the bulkhead walls (6, 7).

12. Vehicle body according to one of the preceding claims, **characterised in that** the fastening is a positive connection.

13. Vehicle body according to Claim 12, **characterised in that** the positive connection is directly to the strut (40).

14. Vehicle body according to Claim 12, **characterised in that** the positive connection is to a beam (5) or reinforcing profile (23) adapted to the contour of the strut, which is inserted into the strut (1; 19) with a precise contour fit.

15. Vehicle body according to Claim 13 or 14, **characterised in that** to form the positive connection on the bulkhead wall (6, 7; 25; 41) or on the stabilising wall (22), at least one head (14, 15, 16; 31, 32; 46) is moulded on, its neck projecting through a hole (10, 11, 13; 30) into the side wall (8, 9; 26) or the base (27) of the strut (40) or the beam (5) or the reinforcing profile (23), so that the head (14, 15, 16; 31, 32; 46) engages behind the edge of the hole (10, 11, 13; 30).

16. Vehicle body according to Claim 15, **characterised in that** the hole (10, 11, 13; 30) is located in a depression (12; 28, 29), which is made by an indentation in the strut (40) or in the beam (5) or in the reinforcing profile (23), and that the height of the head corresponds to the depth of the indentation.

17. Vehicle body according to Claim 15, **characterised in that** each two bulkhead walls (6, 7) running obliquely meet at the side wall (8, 9) and are connected there, and are anchored to the side wall (8, 9) by means of a joint head (14, 15).

## Revendications

1. Carrosserie de véhicule automobile, comportant un élément de structure (1 ; 19 ; 40) profilé en métal avec une section en forme de U, qui est muni de cloisons (6, 7 ; 25 ; 41) en vue de le rigidifier, les cloisons (6, 7 ; 25 ; 41) étant réalisées en matière plastique et étant fixées dans l'élément de structure (1 ; 19 ; 40), **caractérisée en ce que** l'élément de structure forme une partie d'un longeron (1), qui s'étend depuis l'enceinte pour le moteur jusqu'en dessous du plancher métallique et forme une zone coudée dans la zone de transition, et **en ce que** les cloisons (6, 7) sont agencées dans la zone coudée.

2. Carrosserie de véhicule automobile selon la revendication 1, **caractérisée en ce que** les cloisons (6, 7) sont disposées en oblique et forment un treillage (4), qui est assemblé par conjugaison de forme à un support (5).

3. Carrosserie de véhicule automobile selon la revendication 2, **caractérisée en ce que** le treillage (4), dans les points d'intersection des cloisons (6, 7), est assemblé par conjugaison de forme au fond du support (5).

4. Carrosserie de véhicule automobile selon la revendication 1, **caractérisée en ce que** l'élément de structure forme un pied, en particulier le pied milieu (19) de l'habitacle du véhicule.

5. Carrosserie de véhicule automobile selon la revendication 4, **caractérisée en ce que** les cloisons (6, 7) sont fixées dans un profilé de raidissement (23), ajusté au pied, et forment un treillage (4) qui, en haut et en bas du pied milieu (19), s'étend en formant des longerons latéraux (20, 21), orientés perpendiculairement au pied milieu (19).

6. Carrosserie de véhicule automobile selon la revendication 5, **caractérisée en ce que** le treillage (4) dans le pied milieu (19) est formé par des alvéoles en forme de losanges et dans les longerons latéraux (20, 21) est réalisé en forme d'échelle.

7. Carrosserie de véhicule automobile selon la revendication 1, **caractérisée en ce que** l'élément de structure forme une traverse de pare-brise (40).

8. Carrosserie de véhicule automobile selon la revendication 7, **caractérisée en ce que** des parties de la cloison (41) s'avancent à travers une ouverture dans la traverse de pare-brise (40) et sont destinées à former des points de fixation ou de support pour des organes mécaniques du véhicule.

9. Carrosserie de véhicule automobile selon l'une quelconque des revendications précédentes, **caractérisée en ce que** les cloisons (6, 7 ; 25 ; 41) sont orientées perpendiculairement à la dimension longitudinale de l'élément de structure (1 ; 19 ; 40).

10. Carrosserie de véhicule automobile selon la revendication 9, **caractérisée en ce que** les cloisons (6, 7 ; 25 ; 41) s'entrecroisent en oblique par rapport à la dimension longitudinale de l'élément de structure (1 ; 19 ; 40).

11. Carrosserie de véhicule automobile selon la revendication 9 ou 10, **caractérisée en ce qu'**une paroi de stabilisation (22) s'étend dans le sens longitudinal de l'élément de structure (19) et coupe les cloisons (6, 7).

12. Carrosserie de véhicule automobile selon l'une quelconque des revendications précédentes, **caractérisée en ce que** la fixation est un assemblage par conjugaison de forme.

13. Carrosserie de véhicule automobile selon la revendication 12, **caractérisée en ce que** l'assemblage par conjugaison de forme est formé directement par l'élément de structure (40).

14. Carrosserie de véhicule automobile selon la revendication 12, **caractérisée en ce que** l'assemblage par conjugaison de forme est formé par un support (5) ou un profilé de raidissement (23), qui est adapté au contour de l'élément de structure et qui est inséré dans l'élément de structure (1 ; 19) exactement selon le contour de celui-ci.

15. Carrosserie de véhicule automobile selon la revendication 13 ou 14, **caractérisée en ce que** pour la réalisation de l'assemblage par conjugaison de forme, au moins une saillie (14, 15, 16 ; 31, 32 ; 46) est formée sur la cloison (6, 7 ; 25 ; 41) ou sur la paroi de stabilisation (22), le col de celle-ci s'avançant à travers un trou (10, 11, 13 ; 30) ménagé dans la paroi latérale (8, 9 ; 26) ou dans le fond (27) de l'élément de structure (40) ou du support (5) ou du profilé de raidissement (23), de telle sorte que la saillie (14, 15, 16 ; 31, 32 ; 46) enserre le bord du trou (10, 11, 13 ; 30) par derrière.

16. Carrosserie de véhicule automobile selon la revendication 15, **caractérisée en ce que** le trou (10, 11, 13 ; 30) est situé dans un creux (12 ; 28, 29), qui est réalisé par emboutissage dans l'élément de structure (40) ou dans le support (5) ou dans le profilé de raidissement (23), et **en ce que** la hauteur de la saillie correspond à la profondeur de l'emboutissage.

17. Carrosserie de véhicule automobile selon la revendication 15, **caractérisée en ce que** deux cloisons (6, 7) orientées en oblique se rencontrent sur la paroi latérale (8, 9) et y sont assemblées et sont ancrées par l'intermédiaire d'une saillie commune (14, 15) contre la paroi latérale (8, 9).
